# EUROPÄISCHE PATENTSCHRIFT

(11) **EP 1 933 059 B1**
(45) Veröffentlichungstag und Bekanntmachung des Hinweises auf die Patenterteilung: **11.03.2015**
(21) Anmeldenummer: 07120537.1
(22) Anmeldetag: 13.11.2007
(51) Int. Cl.: F16F 9/46

(54) **Schwingungsdämpfer**
Vibration absorber
Amortisseur d'oscillations

(30) Priorität: 15.12.2006 DE 102006059297
(43) Veröffentlichungstag der Anmeldung: 18.06.2008
(73) Patentinhaber: Bayerische Motoren Werke Aktiengesellschaft, 80809 München (DE)
(72) Erfinder: Thiele, Christoph, 85241 Hebertshausen (DE)

(56) Entgegenhaltungen:
- GB-A- 2 074 798
- GB-A- 2 123 112
- US-A- 1 699 678
- US-A- 5 538 439

## Beschreibung

Die Erfindung betrifft einen Schwingungsdämpfer, insbesondere für ein Kraftfahrzeug, mit einer trennbaren Verbindungseinrichtung in einer Kolbenstange, zur Herstellung einer elektrisch leitenden Verbindung, nach dem Oberbegriff des ersten Anspruchs.

Die DE 42 38 734 A1 zeigt eine solche Anordnung an einem Schwingungsdämpfer, die dazu dient, elektrische Einrichtungen im Schwingungsdämpfer anzusteuern. Ein Stecker, der mit einer Kontakthülse die trennbare elektrische Verbindung bildet, ist in der Kolbenstange drehbar, so dass der Kabelabgang des Schwingungsdämpfers in jede gewünschte Richtung gedreht werden kann, um in dessen eingebautem Zustand eine leichte Montage zu ermöglichen. Dazu ist der Stecker mit umlaufenden Kontaktringen versehen, die über Schleifschuhe der in der Kolbenstange feststehenden Kontakthülse abgegriffen werden. In Axialrichtung des Steckers wird dieser durch eine in die Kolbenstange eingeschraubte Haltemutter in seiner Lage, eingesteckt in die Kontakthülse, fixiert. Die Reibung zwischen der mit der Kolbenstange mitdrehenden Haltemutter und dem Stecker bewirkt, dass dieser im Betrieb des Schwingungsdämpfers ebenfalls mit der Kolbenstange mitgedreht wird.

Ein weiterer Schwingungsdämpfer ist aus der GB 2 123 112 bekannt.

Das wirkt sich nachteilig auf die aus der Kolbenstange heraus geführten Elektrokabel aus, die zwar bei der Montage in jede gewünschte Richtung gedreht werden können, beim Betrieb des Schwingungsdämpfers jedoch, wenn die Haltemutter den Stecker fixiert, sich aufgrund der Drehung des Steckers mit der Kolbenstange zumindest begrenzt miteinander verdrillen. Das kann im Lauf der Zeit dazu führen, dass die Ansteuerung der elektrischen Einrichtungen im Schwingungsdämpfer, zum Beispiel durch Kabelabriss, ausfällt, was natürlich negative Folgen für den Betrieb des Kraftfahrzeugs und Reparaturkosten verursacht.

Deshalb ist es Aufgabe der vorliegenden Erfindung, einen Schwingungsdämpfer, insbesondere für ein Kraftfahrzeug, mit einer trennbaren Verbindungseinrichtung in der Kolbenstange, zur Herstellung einer elektrisch leitenden Verbindung bereitzustellen, bei dem im Betrieb ein Verdrillen von Leitungen verhindert wird und dessen Montage einfach ausgeführt werden kann.

Die Aufgabe wird durch die Merkmale des ersten Anspruchs gelöst. Weitere Ausbildungen der Erfindung beschreiben die abhängigen Ansprüche.

Nach der Erfindung ist ein Schwingungsdämpfer, insbesondere für ein Kraftfahrzeug, mit einer trennbaren Verbindungseinrichtung in einer Kolbenstange, zur Herstellung einer elektrisch leitenden Verbindung zwischen mindestens einer von außen in die Kolbenstange einführbaren ersten elektrischen Leitung und mindestens einer in der Kolbenstange weitergeführten zweiten elektrischen Leitung über Steckverbinder an den miteinander zu verbindenden Enden der ersten und der zweiten Leitung, die unter Aufrechterhaltung der elektrisch leitenden Verbindung gegeneinander verdrehbar sind, insbesondere über einen Koaxialstecker und eine mit diesem korrespondierende Koaxialbuchse, wobei mindestens der Steckverbinder der ersten Leitung über ein erstes Halteelement in der Kolbenstange gehalten wird, dadurch gekennzeichnet, dass die Kolbenstange und das erste Halteelement so miteinander verbunden sind, dass dieses bei einer betriebsbedingten Verdrehung der Kolbenstange in Umfangsrichtung deren Verdrehbewegung nicht mitmacht, insbesondere keine Verdrehbewegung ausführt.

Vorteilhafterweise wird so im Betrieb ein Verdrillen von Leitungen verhindert. Rotationsbewegungen der Kolbenstange werden von der Verbindungseinrichtung vorteilhafterweise durch Verdrehen der Steckverbinder zueinander ausgeglichen. Außerdem ist der Stoßdämpfer einfach zu montieren. Zwei, bereits aus dem Stand der Technik bekannte, elektrische Steckverbindungssysteme eignen sich alternativ besonders zur Verwendung für die Erfindung. Einmal das unter dem Begriff Koaxialstecker bekannte System und zum anderen das unter dem Begriff Klinkenstecker bekannte System einer elektrische Kontakte herstellenden Verbindung von Stecker und Buchse, bei denen Stecker und Buchse ineinander verdrehbar sind.

Bevorzugte Ausführungen der Erfindung zeichnen sich dadurch aus, dass der Steckverbinder der zweiten Leitung verdrehfest in der Kolbenstange, insbesondere über ein zweites Halteelement, angebracht ist. Wenn die Kolbenstange dazu, insbesondere an ihrem Innenumfang, mindestens eine in Umfangsrichtung verlaufende, insbesondere durchgehende, Nut aufweist, in die mindestens ein, in radialer Richtung elastisch beweglicher Haltevorsprung, insbesondere eine Haltezunge, des ersten und/oder zweiten Halteelements einrastbar ist und zusätzlich das erste Halteelement deckelartig auf die Kolbenstange aufsetzbar ist, entsteht vorteilhafterweise eine Verbindungseinrichtung, die einfach aufgebaut, preiswert herstellbar und in ihrer Funktion zuverlässig ist.

Eine vorteilhafte Ausführungsform der Erfindung ist dadurch gekennzeichnet, dass die Steckverbinder mehrere, insbesondere zwei, elektrisch leitende Verbindungen herstellen, deren Kontakte in Achsrichtung der Steckverbinder jeweils koaxial ineinander liegen, so dass der Steckverbinder der zweiten in der Kolbenstange weitergeführten Leitungen zu dem Steckverbinder der ersten von außen einführbaren Leitungen in Umfangsrichtung verdrehbar ist. So können vorteilhafterweise zeitsparend und preiswert mittels zweier miteinander korrespondierender Steckverbinder mehrere Steckverbindungen jeweils zweier elektrischer Leitungen durch einen Steckvorgang aufgebaut werden. Dazu können auch vorteilhafterweise im Handel erhältliche Koaxialsteckverbindungen verwendet oder an die Verwendung angepasst werden, was sich günstig auf die Herstellkosten auswirkt.

Genauso ist es, wenn im Handel erhältliche Klinkensteckverbindungen verwendet oder an die Verwendung angepasst werden. Diese Ausführungsform der Erfindung ist dadurch gekennzeichnet, dass die Steckverbinder mehrere, insbesondere zwei, elektrisch leitende Verbindungen herstellen, deren Kontakte in Achsrichtung der Steckverbinder jeweils hintereinander liegen. Auch hier ist der Steckverbinder der zweiten in der Kolbenstange weitergeführten Leitungen zu dem Steckverbinder der ersten von außen einführbaren Leitungen in Umfangsrichtung verdrehbar.

Weitere bevorzugte Ausführungen der Erfindung sind dadurch gekennzeichnet, dass das erste Halteelement, insbesondere über eine Isolierungshülle der von außen einführbaren Leitungen, karosseriefest fixiert ist. Zusätzlich kann ein Halteelement mit dem anderen Halteelement lösbar verrastbar sein, was ein selbständiges Lösen der elektrisch leitenden Verbindung verhindert. Auch diese Maßnahmen sind Beiträge zur preisgünstigen Bereitstellung eines erfindungsgemäßen Schwingungsdämpfers.

Zwei bevorzugte Ausführungsbeispiele der vorliegenden Erfindung sind in der beigefügten Zeichnung dargestellt. Es zeigen:
- Figur 1:: einen Teilschnitt eines erfindungsgemäßen Schwingungsdämpfers mit Steckverbindern in Koaxialbauweise und
- Figur 2:: ebenfalls in einem Teilschnitt, einen erfindungsgemäßen Schwingungsdämpfer mit Steckverbindern in Klinkenbauweise.

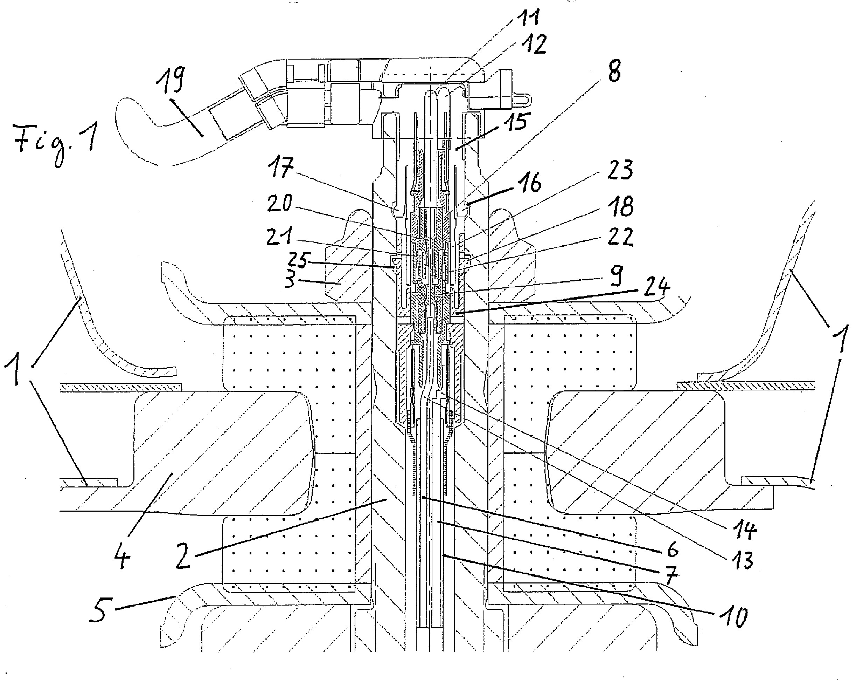

Gezeigt ist in Figur 1 ein einem nicht dargestellten Radführungsglied gegenüberliegender Bereich eines Schwingungsdämpfers und dessen Abstützung am Kraftfahrzeug-Karosserieblech 1, das gewöhnlich nach dem Stand der Technik als Federbeindom geformt ist. Die Gestaltung des Schwingungsdämpfers und seiner Aufhängung im nicht dargestellten Bereich kann wie im bekannten Stand der Technik üblich sein. Eine Kolbenstange 2 des Schwingungsdämpfers ist, ebenfalls wie im bekannten Stand der Technik üblich, rotationsbeweglich in einem Stützlager 5 einer Dämpferaufnahme 4 der Karosserie festgelegt. Eine Mutter 3 fixiert die Kolbenstange 2 im Stützlager 5.

Die Kolbenstange 2 des Schwingungsdämpfers ist hohl ausgeführt. Durch diesen Kanal 10 in der Kolbenstange 2 sind zwei elektrische Leitungen 6, 7, über die Steuereinrichtungen im nicht gezeichneten Schwingungsdämpferkolben angesteuert werden, aus dem Schwingungsdämpfer herausgeführt. Um eine einfache Montage bzw. Demontage des Schwingungsdämpfers im Kraftfahrzeug zu ermöglichen sind die durch die Kolbenstange 2 nach außen geführten elektrischen Leitungen 6, 7 jeweils trennbar gestaltet. Dazu ist in die Kolbenstange 2 eine trennbare Verbindungseinrichtung aus Steckverbindern eingebaut. Solche Steckverbinder sind zum Beispiel ein handelsüblicher oder spezieller so genannter Koaxialstecker 8 und die zugehörige Koaxialbuchse 9. Diese sind so in der Kolbenstange 2 fixiert, dass bei deren Rotation die von außen in die Kolbenstange 2 eingeführten ersten elektrischen Leitungen 11, 12 mit ihrem zugehörigen Steckverbinder, dem Koaxialstecker 8, nicht rotieren, während der mit diesem korrespondierende Steckverbinder, die Koaxialbuchse 9, die Rotation der Kolbenstange 2 mitmacht. Dies verhindert das Verdrillen der über die Kontakte 13, 14 an die Koaxialbuchse 9 angeschlossenen, in der Kolbenstange 2 weitergeführten, zweiten elektrischen Leitungen 6, 7 durch die Rotation der Kolbenstange 2. Durch diese werden also die beiden miteinander korrespondierenden Steckverbinder, der Koaxialstecker 8 und die Koaxialbuchse 9, unter Aufrechterhaltung der elektrisch leitenden koaxialen Verbindungen gegeneinander verdreht. Dadurch wird ein Verdrillen der an die Steckverbinder angeschlossenen ersten 11, 12 und zweiten Leitungen 6, 7 verhindert.

Um die Steckverbinder der Verbindungseinrichtung auf einfache Weise innerhalb der Kolbenstange 2 so wie beschrieben fixiert zu halten, wird der Koaxialstecker 8 der ersten Leitungen 11, 12 über ein erstes Halteelement 15 nicht verdrehbar in der Kolbenstange 2 gehalten. Die Kolbenstange 2 ist so mit dem ersten Halteelement 15 verbunden, dass dieses bei einer betriebsbedingten Verdrehung der Kolbenstange 2 in Umfangsrichtung deren Verdrehbewegung nicht mitmacht und keine Verdrehbewegung ausführt. Das erste Halteelement 15 ist deckelartig auf die Kolbenstange 2 aufsetzbar gestaltet und wird über die Isolierungshülle 19 der von außen eingeführten ersten Leitungen 11, 12 karosseriefest fixiert. Die Kolbenstange 2 besitzt an ihrem Innenumfang eine in Umfangsrichtung verlaufende, durchgehende Nut 16, in die umlaufende, in radialer Richtung elastisch bewegliche Haltezungen 17 des ersten Halteelements 15 beim Aufschieben auf die Kolbenstange 2 in dessen Montageposition einrasten und dieses mit der Nut 16 der Kolbenstange 2 so verclipsen, dass ein Entfernen durch Betriebskräfte nicht möglich ist. Gleichzeitig, automatisch mit dem Aufschieben des ersten Halteelements 15 auf die Kolbenstange 2 wird der Koaxialstecker 8 zum Kontaktaufbau in die Koaxialbuchse 9 eingesteckt.

Dadurch stellen Koaxialstecker 8 und Koaxialbuchse 9 zwei elektrisch leitende Verbindungen her, deren Kontakte 20, 21, 22, 23 in Achsrichtung der beiden Steckverbinder jeweils koaxial ineinander liegen, so dass die Koaxialbuchse 9 mit den zweiten, in der Kolbenstange 2 weitergeführten Leitungen 6, 7 in dem Koaxialstecker 8 der ersten von außen eingeführten Leitungen 11, 12 in Umfangsrichtung verdrehbar ist, ohne die Leitungen zu verdrillen. Die Kontakte 20, 21, 22, 23 von Koaxialstecker 8 und Koaxialbuchse 9 sind in der Figur gezeichnet, 20 bezeichnet den Innenkontakt des Koaxialsteckers 8, 21 dessen Außenkontakt, 22 den Innenkontakt der Koaxialbuchse 9 und 23 deren Außenkontakt. Zwischen Innenkontakt 20, 22 und Außenkontakt 21, 23 des Koaxialsteckers 8 beziehungsweise der Koaxialbuchse 9 befindet sich jeweils eine Isolierbuchse.

Zum Erfüllen dieser Funktion muss der Steckverbinder der zweiten Leitungen 6, 7, die Koaxialbuchse 9, verdrehfest in der Kolbenstange 2 angebracht sein. Dies ist über ein zweites Halteelement 24 verwirklicht, das in die Kolbenstange 2 eingebracht ist und in dieser reibungsbedingt in Umfangsrichtung festgelegt ist. Zur Festlegung in axialer Richtung weist die Kolbenstange 2 an ihrem Innenumfang eine weitere in Umfangsrichtung verlaufende, durchgehende Nut 25 auf, in die in radialer Richtung umlaufende elastisch bewegliche Haltezungen 18 des zweiten Halteelements 24 einrasten, wenn dieses in seine Montagestellung in der Kolbenstange 2 gebracht wird. Im zweiten Halteelement 24 wird verdreh und axial fest die Koaxialbuchse 9 eingeclipst gehalten.

Erstes und zweites Halteelement 15, 24 können ebenfalls nicht gezeichnete Einrichtungen besitzen, die es erlauben beide aneinander in axialer Richtung beim Aufeinanderstecken in ihrer Endstellung lösbar zu verrasten. Das verhindert ein selbständiges Lösen der elektrisch leitenden Verbindung, ohne die Notwendigkeit, das erste Halteelement 15 in der Kolbenstange 2 in axialer Richtung verrastbar ausbilden zu müssen.

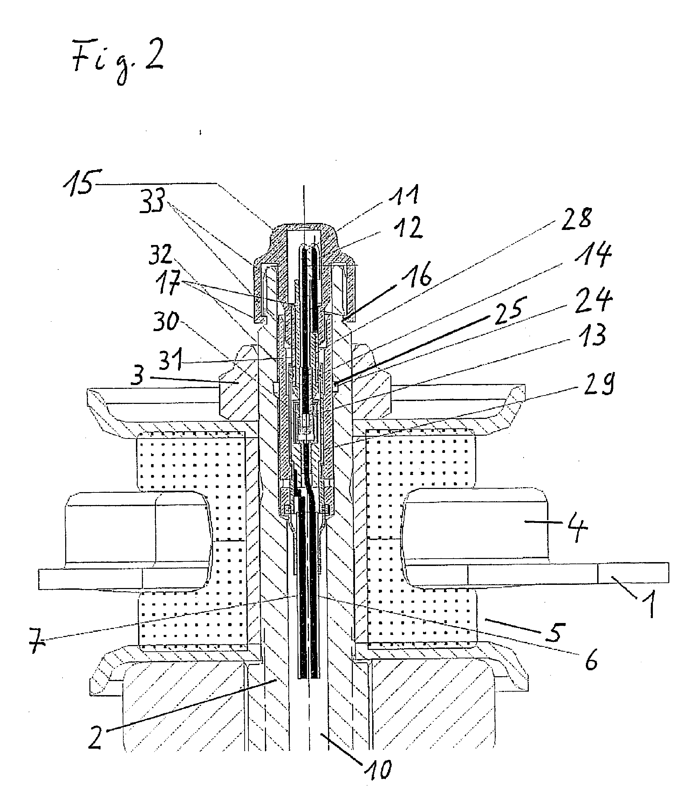

In der selben Darstellungsform entsprechend Figur 1, mit den selben Bezugsziffern für einander von der Funktion her entsprechende Teile zeigt Figur 2 ebenfalls einen einem nicht dargestellten Radführungsglied gegenüberliegender Bereich eines Schwingungsdämpfers und dessen Abstützung am Kraftfahrzeug-Karosserieblech 1. Die Kolbenstange 2 des Schwingungsdämpfers ist rotationsbeweglich in dem Stützlager 5 der Dämpferaufnahme 4 der Karosserie festgelegt. Eine Mutter 3 fixiert die Kolbenstange 2 im Stützlager 5.

Die Kolbenstange 2 des Schwingungsdämpfers ist hohl ausgeführt. Durch diesen Kanal 10 in der Kolbenstange 2 sind zwei elektrische Leitungen 6, 7, über die Steuereinrichtungen im nicht gezeichneten Schwingungsdämpferkolben angesteuert werden, aus dem Schwingungsdämpfer herausgeführt. Um eine einfache Montage bzw. Demontage des Schwingungsdämpfers im Kraftfahrzeug zu ermöglichen sind die durch die Kolbenstange 2 nach außen geführten elektrischen Leitungen 6, 7 jeweils trennbar gestaltet. Dazu ist in die Kolbenstange 2 eine trennbare Verbindungseinrichtung aus Steckverbindern eingebaut. Solche Steckverbinder sind zum Beispiel ein handelsüblicher oder spezieller so genannter Klinkenstecker 28 und die zugehörige Klinkenbuchse 29. Diese sind so in der Kolbenstange 2 fixiert, dass bei deren Rotation die von außen in die Kolbenstange 2 eingeführten ersten elektrischen Leitungen 11, 12 mit ihrem zugehörigen Steckverbinder, dem Klinkenstecker 28, nicht rotieren, während der mit diesem korrespondierende Steckverbinder, die Klinkenbuchse 29, die Rotation der Kolbenstange 2 mitmacht. Dies verhindert das Verdrillen der über die Kontakte 13, 14 an die Klinkenbuchse 29 angeschlossenen, in der Kolbenstange 2 weitergeführten, zweiten elektrischen Leitungen 6, 7 durch die Rotation der Kolbenstange 2. Durch diese werden also die beiden miteinander korrespondierenden Steckverbinder, der Klinkenstecker 28 und die Klinkenbuchse 29, unter Aufrechterhaltung der elektrisch leitenden, hintereinander angeordneten Verbindungen gegeneinander verdreht. Dadurch wird ein Verdrillen der an die Steckverbinder angeschlossenen ersten 11, 12 und zweiten Leitungen 6, 7 verhindert.

Um die Steckverbinder der Verbindungseinrichtung auf einfache Weise innerhalb der Kolbenstange 2 so wie beschrieben fixiert zu halten, wird der Klinkenstecker 28 der ersten Leitungen 11, 12 über das erste Halteelement 15 nicht verdrehbar in der Kolbenstange 2 gehalten. Die Kolbenstange 2 ist so mit dem ersten Halteelement 15 verbunden, dass dieses bei einer betriebsbedingten Verdrehung der Kolbenstange 2 in Umfangsrichtung deren Verdrehbewegung nicht mitmacht und keine Verdrehbewegung ausführt. Das erste Halteelement 15 ist deckelartig auf die Kolbenstange 2 aufsetzbar gestaltet und wird über die nicht gezeichnete Isolierungshülle der von außen eingeführten ersten Leitungen 11, 12 karosseriefest fixiert. Die Kolbenstange 2 besitzt an ihrem Außenumfang eine in Umfangsrichtung verlaufende, durchgehende Nut 16, in die umlaufende, in radialer Richtung elastisch bewegliche Haltezungen 17 des ersten Halteelements 15 beim Aufschieben auf die Kolbenstange 2 in dessen Montageposition einrasten und dieses mit der Nut 16 der Kolbenstange 2 so verclipsen, dass ein Entfernen durch Betriebskräfte nicht möglich ist. Gleichzeitig, automatisch mit dem Aufschieben des ersten Halteelements 15 auf die Kolbenstange 2 wird der Klinkenstecker 28 zum Kontaktaufbau in die Klinkenbuchse 29 eingesteckt.

Dadurch stellen Klinkenstecker 28 und Klinkenbuchse 29 zwei elektrisch leitende Verbindungen her, deren Kontakte in Achsrichtung der beiden Steckverbinder hintereinander liegen, so dass die Klinkenbuchse 29 mit den zweiten, in der Kolbenstange 2 weitergeführten Leitungen 6, 7 in dem Klinkenstecker 28 der ersten von außen eingeführten Leitungen 11, 12 in Umfangsrichtung verdrehbar ist, ohne die Leitungen zu verdrillen. Die Kontaktverbindungen 30, 31 jeweils von Klinkenstecker 28 zu Klinkenbuchse 29 sind in der Figur gezeichnet, 30 bezeichnet die Verbindung des vorderen Kontakts des Klinkensteckers 28 zu dem hinteren Kontakt der Klinkenbuchse 29, 31 die Verbindung deren vorderen Kontakts zu dem hinteren Kontakt des Klinkensteckers 28. Zwischen vorderem und hinterem Kontakt des Klinkensteckers 28 beziehungsweise der Klinkenbuchse 29 befindet sich jeweils eine Isolierbuchse.

Zum Erfüllen der beschriebenen Funktion muss der Steckverbinder der zweiten Leitungen 6, 7, die Klinkenbuchse 29, verdrehfest in der Kolbenstange 2 angebracht sein. Dies ist über ein zweites Halteelement 24 verwirklicht, das in die Kolbenstange 2 eingebracht ist und in dieser reibungsbedingt in Umfangsrichtung festgelegt ist. Zur Festlegung in axialer Richtung weist die Kolbenstange 2 an ihrem Innenumfang eine weitere in Umfangsrichtung verlaufende, durchgehende Nut 25 auf, in die in radialer Richtung elastisch bewegliche, nicht gezeichnete Halteelemente des zweiten Halteelements 24 einrasten, wenn dieses in seine Montagestellung in der Kolbenstange 2 gebracht wird. Im zweiten Halteelement 24 wird verdreh und axial fest die Klinkenbuchse 29 eingeclipst gehalten.

Über Führungsflächen 33 ist das erste Halteelement 15 mit dem zweiten Halteelement 24 und mit dem oberen Ende der Kolbenstange 2 ineinander selbstzentrierend ausgeführt. Eine weitere Verrastung gegen in axialer Richtung wirkende Kräfte bewirkt eine umlaufende Nut 32 im Klinkenstecker 28, in die die Klinke der Klinkenbuchse 29 einrastet. Dadurch werden Klinkenstecker 28 und Klinkenbuchse 29 beim Aufeinanderstecken miteinander in axialer Richtung in ihrer Endstellung lösbar verrastet.

## Patentansprüche

1. Schwingungsdämpfer mit einer trennbaren Verbindungseinrichtung in einer Kolbenstange (2), zur Herstellung einer elektrisch leitenden Verbindung zwischen mindestens einer von außen in die Kolbenstange (2) einführbaren ersten elektrischen Leitung (11, 12) und mindestens einer in der Kolbenstange (2) weitergeführten zweiten elektrischen Leitung (6, 7) über Steckverbinder an den miteinander zu verbindenden Enden der ersten (11, 12) und der zweiten Leitung (6, 7), die unter Aufrechterhaltung der elektrisch leitenden Verbindung gegeneinander verdrehbar sind, wobei mindestens der Steckverbinder der ersten Leitung (11, 12) über ein erstes Halteelement (15) in der Kolbenstange (2) gehalten wird, **dadurch gekennzeichnet, dass** die Kolbenstange (2) und das erste Halteelement (15) so miteinander verbunden sind, dass dieses und die von außen in die Kolbenstange (2) eingeführte erste elektrische Leitung (11, 12) mit ihrem zugehörigen Steckverbinder bei einer Rotation der Kolbenstange (2) in Umfangsrichtung nicht rotiert, während der mit dem Steckverbinder der ersten elektrischen Leitung (11, 12) korrespondierende Steckverbinder die Rotation der Kolbenstange (2) mitmacht.

2. Schwingungsdämpfer nach Anspruch 1, **dadurch gekennzeichnet, dass** der Steckverbinder der zweiten Leitung (6, 7) über ein zweites Halteelement (24) verdrehfest in der Kolbenstange (2) angebracht ist.

3. Schwingungsdämpfer nach einem der Ansprüche 1 oder 2, **dadurch gekennzeichnet, dass** die Kolbenstange (2) an ihrem Innenumfang mindestens eine in Umfangsrichtung verlaufende, durchgehende Nut (16, 25) aufweist, in die mindestens ein, in radialer Richtung elastisch beweglicher Haltevorsprung des ersten (15) und/oder zweiten Halteelements (24) einrastbar ist.

4. Schwingungsdämpfer nach einem der Ansprüche 1 bis 3, **dadurch gekennzeichnet, dass** das erste Halteelement (15) deckelartig auf die Kolbenstange (2) aufsetzbar ist.

5. Schwingungsdämpfer nach einem der Ansprüche 1 bis 4, **dadurch gekennzeichnet, dass** die Steckverbinder mehrere elektrisch leitende Verbindungen herstellen, deren Kontakte (20, 21, 22, 23) in Achsrichtung der Steckverbinder jeweils koaxial ineinander liegen, so dass der Steckverbinder der zweiten in der Kolbenstange (2) weitergeführten Leitungen (6, 7) zu dem Steckverbinder der ersten von außen einführbaren Leitungen (11, 12) in Umfangsrichtung verdrehbar ist.

6. Schwingungsdämpfer nach einem der Ansprüche 1 bis 4, **dadurch gekennzeichnet, dass** die Steckverbinder mehrere elektrisch leitende Verbindungen (30, 31) herstellen, deren Kontakte in Achsrichtung der Steckverbinder hintereinander liegen.

7. Schwingungsdämpfer nach einem der Ansprüche 1 bis 6, **dadurch gekennzeichnet, dass** das erste Halteelement (15) karosseriefest fixiert ist.

8. Schwingungsdämpfer nach Anspruch 7, **dadurch gekennzeichnet, dass** das erste Halteelement (15) über eine Isolierungshülle (19) der von außen einführbaren Leitungen (11, 12) karosseriefest fixiert ist.

9. Schwingungsdämpfer nach einem der Ansprüche 2 bis 8, **dadurch gekennzeichnet, dass** das erste Halteelement (15) mit dem zweiten Halteelement (24) lösbar verrastbar ist, damit ein selbständiges Lösen der elektrisch leitenden Verbindung verhindert wird.

10. Schwingungsdämpfer nach einem der Ansprüche 1 bis 9, **dadurch gekennzeichnet, dass** die Steckverbinder ein Koaxialstecker (8) und eine mit diesem korrespondierende Koaxialbuchse (9) sind.

## Claims

1. A vibration absorber with a separable connection device in a piston rod (2), for producing an electrically conductive connection between at least a first electric line (11, 12), which can be introduced from outside into the piston rod (2), and at least a second electric line (6, 7), which is guided further in the piston rod (2), by means of plug connectors at the ends of the first (11, 12) and the second line (6, 7) that are to be connected to one another, which plug connectors can be rotated in relation to one another while maintaining the electrically conductive connection, wherein at least the plug connector of the first line (11, 12) is held by a first holding element (15) in the piston rod (2), **characterised in that** the piston rod (2) and the first holding element (15) are connected to one another in such a way that the latter and the first electric line (11, 12), which is inserted from outside into the piston rod (2), with its associated plug connector do not rotate upon a rotation of the piston rod (2) in the peripheral direction, while the plug connector corresponding to the plug connector of the first electric line (11, 12) participates in the rotation of the piston rod (2).

2. A vibration absorber according to claim 1, **characterised in that** the plug connector of the second line (6, 7) is non-rotatably attached in the piston rod (2) by means of a second holding element (24).

3. A vibration absorber according to either of claims 1 or 2, **characterised in that** the piston rod (2), at its inner periphery, has at least one continuous groove (16, 25) running in the peripheral direction, into which at least one holding projection, which is resiliently movable in the radial direction, of the first (15) and/or the second holding element (24) can be latched.

4. A vibration absorber according to any one of claims 1 to 3, **characterised in that** the first holding element (15) can be placed in the manner of a lid on the piston rod (2).

5. A vibration absorber according to any one of claims 1 to 4, **characterised in that** the plug connectors produce a plurality of electrically conductive connections, the contacts (20, 21, 22, 23) of which in each case lie coaxially inside one another in the axial direction of the plug connectors, so the plug connector of the second lines (6, 7), which are guided further in the piston rod (2), can be rotated with respect to the plug connector of the first lines (11', 12), which can be introduced from outside, in the peripheral direction.

6. A vibration absorber according to any one of claims 1 to 4, **characterised in that** the plug connectors produce a plurality of electrically conductive connections (30, 31), the contacts of which lie one behind the other in the axial direction of the plug connectors.

7. A vibration absorber according to any one of claims 1 to 6, **characterised in that** the first holding element (15) is fixed so as to be secured to the body.

8. A vibration absorber according to claim 7, **characterised in that** the first holding element (15) is fixed so as to be secured to the body by means of an insulation sleeve (19) of the lines (11, 12), which can be introduced from outside.

9. A vibration absorber according to any one of claims 2 to 8, **characterised in that** the first holding element (15) can be releasably latched to the second holding element (24), so that an independent release of the electrically conductive connection is prevented.

10. A vibration absorber according to any one of claims 1 to 9, **characterised in that** the plug connectors are a coaxial plug (8) and a coaxial socket (9) corresponding thereto.

## Revendications

1. Amortisseur de vibrations comportant un dispositif de connexion séparable dans une tige de piston (2) pour permettre d'obtenir une connexion électriquement conductrice entre au moins un premier conducteur électrique (11, 12) pouvant être introduit par l'extérieur dans la tige de piston (2) et au moins un second conducteur électrique (6, 7) pouvant ensuite être introduit dans la tige de piston (2) par l'intermédiaire de connecteurs à fiches au niveau des extrémités devant être reliées entre elles du premier conducteur (11, 12) et du second conducteur (6, 7) qui peuvent être déplacés en rotation l'un par rapport à l'autre en conservant la connexion électriquement conductrice,
au moins le connecteur à fiches du premier conducteur (11, 12) étant maintenu dans la tige de piston (2) par l'intermédiaire d'un premier élément de maintien (15),
**caractérisé en ce que**
la tige de piston (2) et le premier élément de maintien (15) sont reliés de sorte que cet élément et le premier conducteur électrique (11, 12) introduit par l'extérieur dans la tige de piston (2) ne tournent pas en direction périphérique avec leur connecteur à fiches associé lors d'une rotation de la tige de piston (2) tandis que le connecteur à fiches correspondant au connecteur à fiches du premier conducteur électrique (11, 12) participe à la rotation de la tige de piston (2).

2. Amortisseur de vibrations conforme à la revendication 1,
**caractérisé en ce que**
le connecteur à fiches du second conducteur (6, 7) est monté solidairement en rotation dans la tige de piston (2) par l'intermédiaire d'un second élément de maintien (24).

3. Amortisseur de vibrations conforme à l'une des revendications 1 et 2,
**caractérisé en ce que**
la tige de piston (2) comporte, sur sa périphérie interne au moins une rainure continue (16, 25) s'étendant en direction périphérique dans laquelle peut être encliquetée au moins une saillie de maintien mobile élastiquement en direction radiale du premier élément de maintien (15) et/ou du second élément de maintien (24).

4. Amortisseur de vibrations conforme à l'une des revendications 1 à 3,
**caractérisé en ce que**
le premier élément de maintien (15) peut être monté sur la tige de piston (2) à la manière d'un capuchon.

5. Amortisseur de vibrations conforme à l'une des revendications 1 à 4,
**caractérisé en ce que** les connecteurs à fiches permettent d'obtenir plusieurs connexions électriquement conductrices dont les contacts (20, 21, 22, 23) sont respectivement situés coaxialement les uns dans les autres dans la direction axiale des connecteurs à fiches de sorte que le connecteur à fiches des seconds conducteurs (6, 7) introduits ensuite dans la tige de piston (2) puisse être mobile en rotation en direction périphérique par rapport au connecteur à fiches des premiers conducteurs (11, 12) pouvant être introduits par l'extérieur.

6. Amortisseur de vibrations conforme à l'une des revendications 1 à 4,
**caractérisé en ce que**
les connecteurs à fiches permettent d'obtenir plusieurs connexions électriquement conductrices (30, 31) dont les contacts sont situés les uns derrière les autres dans la direction axiale des connecteurs à fiches.

7. Amortisseur de vibrations conforme à l'une des revendications 1 à 6,
**caractérisé en ce que**
le premier élément de maintien (15) est fixé solidairement à une carrosserie.

8. Amortisseur de vibrations conforme à l'une des revendications 1 à 7,
**caractérisé en ce que**
le premier élément de maintien (15) est fixé solidairement à une carrosserie par l'intermédiaire d'une gaine d'isolation (19) des conducteurs (11, 12) pouvant être introduits par l'extérieur.

9. Amortisseur de vibrations conforme à l'une des revendications 2 à 8,
**caractérisé en ce que**
le premier élément de maintien (15) peut être encliqueté de façon amovible avec le second élément de maintien (24) pour empêcher ainsi un desserrage spontané de la connexion électriquement conductrice.

10. Amortisseur de vibrations conforme à l'une des revendications 1 à 9,
**caractérisé en ce que**
les connecteurs à fiches sont constitués par une fiche coaxiale (8) et une douille coaxiale (9) correspondant à celle-ci.
